# EUROPÄISCHE PATENTSCHRIFT

(11) **EP 3 233 523 B1**
(45) Veröffentlichungstag und Bekanntmachung des Hinweises auf die Patenterteilung: **27.12.2023**
(21) Anmeldenummer: 15790552.2
(22) Anmeldetag: 05.11.2015
(51) Int. Cl.: B60B 3/14, B60B 5/02, B60B 27/00, B60B 27/02

(54) **RAD FÜR EIN MOTORRAD ODER EINEN MOTORROLLER**
WHEEL FOR A MOTORCYCLE OR A MOTOR SCOOTER
ROUE POUR UNE MOTOCYCLETTE OU UN SCOOTER

(30) Priorität: 17.12.2014 DE 102014226147
(43) Veröffentlichungstag der Anmeldung: 25.10.2017
(73) Patentinhaber: Bayerische Motoren Werke Aktiengesellschaft, 80809 München (DE)
(72) Erfinder: JÄGER, Elmar, 87439 Kempten im Allgäu (DE); KASSNER, Bernd, 85229 Markt Indersdorf (DE)
(86) Internationale Anmeldenummer: PCT/EP2015/075766
(87) Internationale Veröffentlichungsnummer: WO 2016/096237

(56) Entgegenhaltungen:
- EP-A1- 1 150 848
- WO-A1-95/03943
- DE-A1- 10 120 203
- DE-A1- 19 916 444
- JP-A- H07 290 901

## Beschreibung

Die Erfindung betrifft ein Rad für ein Motorrad oder Motorroller, insbesondere ein Hinterrad eines Motorrads oder eines Motorrollers.

Die WO 95/03943 A1 zeigt ein herkömmliches Rad aus Metall mit einer Felge, einem Nabenbereich und Speichen, die die Felge mit dem Nabenbereich verbinden. Der Nabenbereich setzt sich aus zwei Nabenbauteilen zusammen, die formschlüssig miteinander verbunden sind.

Die gattungsgemäße JP 07 290901 A zeigt ein Rad für ein Fahrrad, dessen Speichen und Felgen aus einem faserverstärkten Kunststoff bestehen. Radial innen endet der aus faserverstärktem Kunststoff bestehende Teil des Rades in einem Nabenteil mit einer zylindrischen Öffnung, durch die eine Achse des Rades hindurchgeführt ist. Zwei metallische Einsätze bilden die eigentliche Nabe des Rads und sind auf die Achse aufgesteckt. Die beiden Einsätze haben an einem axialen Ende jeweils eine Verzahnung, wobei die Verzahnungen axial formschlüssig ineinandergreifen. Bei der Montage wird die Achse durch die Öffnung im Nabenteil des Rads geschoben, und die beiden Einsätze werden seitlich in die Öffnung und auf die Achse aufgesteckt.

Die DE 101 20 203 A1 und die DE 199 16 444 A1 zeigen jeweils ein Motorradrad, das aus zwei einstückigen Einzelteilen zusammengesetzt ist, die jeweils aus einem einzigen Material bestehen. Die beiden Radhälften sind im Nabenbereich durch einen axialen und radialen Formschluss verbunden.

Aus Gründen der Gewichtsersparnis ist man bestrebt, bei Kraftfahrzeugen leichtere Bauteile zu verwenden. In den letzten Jahren werden daher verstärkt faserverstärkte Kunststoffe eingesetzt.

Dieses Konzept wird auch bei Motorrad-Rädern umgesetzt. Felge und Speichen können dabei vollständig aus faserverstärktem Kunststoff, insbesondere aus kohlefaserverstärktem Kunststoff, gefertigt sein.

Im Nabenbereich werden dabei bisher an axial entgegengesetzten Seiten des Rades zwei metallische Einsätze in den faserverstärkten Kunststoff eingebettet, die der Krafteinleitung von einem Antriebsritzel auf der einen Radseite sowie von einer Bremsscheibe auf der anderen Radseite dienen. Die beiden voneinander beabstandeten Einsätze werden separat von beiden Seiten des Rads eingefügt.

Die herkömmlich verwendeten faserverstärkten Kunststoffe sind nur für eine gewisse maximale Temperatur ausgelegt. Gerade am bremsscheibenseitigen Einsatz können jedoch bei Bremsmanövern hohe Temperaturen auch für längere Zeiten auftreten, sodass für eine zusätzliche Wärmeableitung gesorgt werden muss.

Aufgabe der Erfindung ist es, ein Rad zu schaffen, das möglichst leicht, und möglichst temperaturunempfindlich ist.

Erfindungsgemäß wird dies bei einem Rad für ein Motorrad oder einen Motorroller mit den Merkmalen des Anspruchs 1 erreicht.

Aufgrund der formschlüssigen Verbindung der beiden Einsätze erfolgt ein schneller Transfer von Wärmeenergie in axialer Richtung vom bremsscheibenseitigen Einsatz auch auf die gegenüberliegende Seite des Rads auf den zweiten Einsatz. So ergibt sich eine bessere Verteilung der Wärmeenergie, und die zusätzliche Fläche des zweiten Einsatzes hat außerdem eine bessere Dissipation der Wärmeenergie zur Folge. Durch den Wärmeübertrag auf den zweiten Einsatz erfolgt auch eine gleichmäßigere Erwärmung des Nabenbereichs des Rads, sodass es zu einer gleichmäßigeren Belastung der faserverstärkten Kunststoffabschnitte durch die Wärmeeinwirkung kommt.

Durch den formschlüssigen Eingriff der beiden auf entgegengesetzten Seiten des Rads liegenden Einsätze wird zudem eine koaxiale Ausrichtung der Krafteinleitungspunkte beider Einsätze bezüglich der Radachse und damit eine korrekte Ausrichtung des gesamten Nabenbereichs auf einfache Weise sichergestellt. Die Krafteinleitungspunkte können beispielsweise durch Öffnungen im jeweiligen Einsatz gebildet sein.

Zwischen den beiden Einsätzen ist auch ein Form- und Kraftschluss in Umfangsrichtung gebildet. Dies hat den Vorteil, dass Beschleunigungskräfte, sowohl beim Erhöhen der Fahrzeuggeschwindigkeit über das Antriebsritzel als auch beim Verzögern des Zweirads über die Bremsscheibe, stets gleichmäßig auf beide Einsätze übertragen werden, was die Stabilität des gesamten Rades erhöht. Der Form- und Kraftschluss in Umfangsrichtung sorgt dabei für eine gleichmäßige Krafteinleitung in den gesamten Nabenbereich des Rades.

Zur Herstellung des Form- und Kraftschlusses in Umfangsrichtung sind an zumindest einer radialen Außenseite eines der Einsätze sowie an zumindest einer radialen Innenseite des anderen Einsatzes komplementäre, ineinandergreifende Verzahnungen ausgebildet. Vorzugsweise sind die Verzahnungen jeweils an allen freien Enden der Schenkel und an allen Anlageabschnitten beider Einsätze vorgesehen, die für den axialen Formschluss ineinandergreifen.

Wie bei bekannten Rädern ist einer der Einsätze zur Befestigung einer Bremsscheibe und/oder der andere Einsatz zur Befestigung eines Antriebsritzels ausgelegt. Die Befestigung von Antriebsritzel bzw. Bremsscheibe kann über die Öffnungen in den Einsätzen erfolgen. Die Erfindung kann sowohl bei Hinter als auch bei Vorderrädern eingesetzt werden, wobei bei der Verwendung als Vorderrad kein Antriebsritzel vorgesehen sein muss.

Die beiden Einsätze können mit dem umgebenden Faserverbund der faserverstärkten Kunststoffabschnitte des Rades beispielsweise durch Einpressen, Verkleben oder Einlaminieren verbunden sein, wobei zusätzlich optional der Kunststoff auch in Ausnehmungen am Einsatz eingreifen kann.

Der faserverstärkte Kunststoff ist beispielsweise ein kohlefaserverstärkter Kunststoff (CFK). Selbstverständlich können auch andere geeignete Fasern zur Verstärkung eingesetzt werden.

Das Rad kann mit Ausnahme der Einsätze und natürlich eines Reifens im Wesentlichen vollständig aus faserverstärktem Kunststoff bestehen. Weitere metallische Bestandteile neben den beiden Einsätzen sind im Nabenbereich normalerweise nicht vorgesehen.

Die Abschnitte der beiden Einsätze, die den axialen Formschluss bilden, liegen vorzugsweise im Wesentlichen in der axialen Mitte der beiden Einsätze.

Zur Bildung des Formschlusses kann zumindest einer der Einsätze wenigstens einen umlaufenden, sich axial erstreckenden Schenkel aufweisen, der an seinem freien Ende an einem Anlageabschnitt des anderen Einsatzes anliegt.

Am freien Ende des Schenkels und/oder am Anlageabschnitt ist beispielsweise eine Schulter ausgebildet, die einen axialen und einen radialen Anschlag darstellt, sodass bei Anlage der Einsätze aneinander ein Formschluss in axialer und radialer Richtung entsteht. So nehmen die Einsätze beim Zusammensetzen der Einsätze bei der Fertigung des Rades auf einfache Weise ihre korrekte Endmontageposition in Axial- und Radialrichtung ein. Hierbei wird auch automatisch für eine Zentrierung der Krafteinleitungspunkte beider Einsätze gesorgt.

In einer bevorzugten Ausführungsform weist jeder Einsatz zwei umlaufende, koaxiale, sich axial erstreckende Schenkel auf, wobei an jedem der Paare gegenüberliegender Schenkel jeweils an einem der Schenkel ein Anlageabschnitt ausgebildet ist. In einer möglichen Variante sind beide Anlageabschnitte am selben Einsatz vorgesehen.

Jeder der Anlageabschnitte kann eine Schulter aufweisen, wobei vorzugsweise die Schultern der beiden Anlageabschnitte bezüglich der Radialrichtung spiegelbildlich ausgebildet sind, um eine sichere Fixierung in Radialrichtung zu erreichen. In diesem Fall werden die freien Enden der Schenkel des einen Einsatzes z.B. so auf die Anlageabschnitte aufgeschoben, dass die freien Enden diese radial umgreifen. Mit einer solchen Geometrie lässt sich sowohl der radiale als auch der axiale Formschluss einfach durch das axiale Zusammenschieben der beiden Einsätze herstellen.

Die den freien Enden der Schenkel entgegengesetzten Enden sind vorzugsweise in jedem Einsatz über eine sich z.B. senkrecht zur Axialrichtung erstreckende Ringscheibe verbunden.

Im Bereich des Formschlusses müssen die beiden Einsätze nicht fest miteinander verbunden sein, sondern können über die Einbettung in die Abschnitte aus faserverstärktem Kunststoff des Rades in ihrer Position gehalten werden.

Beide Einsätze zusammen umschließen vorteilhaft einen torusförmigen Hohlraum, sowohl um Gewicht einzusparen als auch um die Stabilität des Rades zu erhöhen. Der Hohlraum kann zwischen den in Axialrichtung verlaufenden Schenkeln und den Ringscheiben der beiden Einsätze ausgebildet sein.

Die Erfindung wird nachfolgend anhand eines Ausführungsbeispiels mit Bezug auf die beigefügten Zeichnungen näher beschrieben. In den Zeichnungen zeigen:
- Figur 1 eine schematische Schnittansicht eines Ausschnitts eines erfindungsgemäßen Rads senkrecht zur Umfangsrichtung; und
- Figur 2 eine schematische Schnittansicht der beiden Einsätze des Rades aus Figur 1 senkrecht zur Axialrichtung.

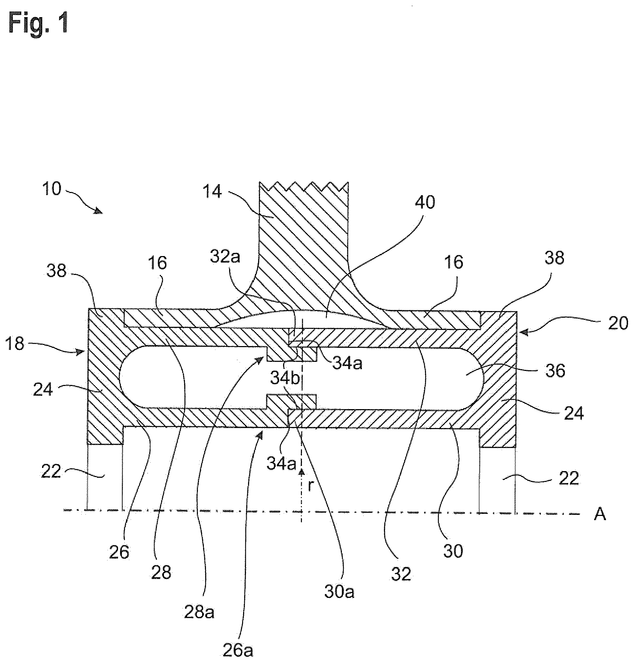

Figur 1 zeigt einen Ausschnitt eines Rads 10 eines Motorrads oder Motorrollers in einem Schnitt durch dessen Achse A senkrecht zur Umfangsrichtung U.

Das Rad 10 hat einen radial innenliegenden Nabenbereich 42 und einen der Nabenbereich radial außen umgebenden Radkranz, von dem lediglich eine der Nabenbereich und eine Felge verbindende Speiche 14 in Figur 1 angedeutet ist.

Sowohl die Speichen 14 als auch die Felge bestehen hier soweit wie möglich aus einem faserverstärkten Kunststoff, beispielsweise einem Faserverbund mit Kohlefasern und einem geeigneten Polymer.

Radial außen am Nabenbereich setzt ein umfangsmäßig umlaufender Abschnitt 16 aus faserverstärktem Kunststoff an, der entlang des Umfangs einstückig in mehrere Speichen 14 übergeht.

Im radialen Zentrum des Nabenbereichs sind zwei starre, selbsttragende metallische Einsätze 18, 20 angeordnet, die an gegenüberliegenden Seiten des Rads 10 axial von außen zugänglich sind.

Beide Einsätze 18, 20 haben jeweils eine mittige Durchgangsöffnung 22, mittels der das Rad 10 auf einer Achse des Zweirads gelagert werden kann, sowie mehrere (nicht dargestellte) Öffnungen, über die auf einer Seite des Rads 10 an einem der Einsätze ein Antriebsritzel und auf der anderen Seite des Rads 10 am anderen Einsatz eine Bremsscheibe befestigt werden (nicht gezeigt).

Die beiden Einsätze 18, 20 sind in Axialrichtung A und Radialrichtung r formschlüssig miteinander verbunden.

In der gezeigten Ausführungsform sind beide Einsätze 18, 20 ähnlich geformt. Jeder der Einsätze 18, 20 hat die Form eines umfangsmäßig umlaufenden U-Profils, wobei die geschlossene Seite des U durch eine im Rad 10 nach außen weisende Ringscheibe 24 gebildet ist, die auch die Öffnungen aufweist. Die Ringscheiben 24 beider Einsätze 18, 20 können im Wesentlichen identisch geformt sein.

Die Schenkel 26, 28, 30, 32 des U-Profils verlaufen bei beiden Einsätzen 18, 20 großteils entlang der Axialrichtung A, wobei die Schenkel 26, 28 des ersten Einsatzes 18 und die Schenkel 30, 32 des zweiten Einsatzes 20 jeweils koaxial zueinander angeordnet sind.

Die freien Enden 30a, 32a der Schenkel 30, 32 des zweiten Einsatzes 20 treffen in Axialrichtung A auf Anlageabschnitte 26a, 28a an den freien Enden der Schenkel 26, 28 des ersten Einsatzes 18.

Die Anlagenabschnitte 26a, 28a sind jeweils in Form einer Schulter ausgebildet, die einen radial verlaufenen Bereich 34a definiert, an dem das jeweilige freie Ende 30a, 32a der Schenkel 30, 32 des zweiten Einsatzes 20 in Axialrichtung A anliegt. Außerdem definiert jede Schulter einen axial verlaufenden Bereich 34b, hier gebildet durch ein radial versetztes freies Ende des Schenkels 26, 28 des ersten Einsatzes 18, an dem das freie Ende 30a, 32a in Radialrichtung r anliegt. Die Schulter bildet somit einen Anschlag in Axialrichtung A sowie in Radialrichtung r für das zugeordnete freie Ende 30a, 32a des Schenkels 30, 32.

Die axial verlaufenen Bereiche 34b der beiden Anlageabschnitte 26a, 28a sind bezüglich der Radialrichtung r hier spiegelbildlich angeordnet, sodass sie radial innerhalb der freien Enden 30a, 32a der Schenkel 30, 32 liegen. Beim Zusammenschieben der beiden Einsätze 18, 20 entlang der Axialrichtung A wird so ein Formschluss sowohl in Axialrichtung A als auch in Radialrichtung r erreicht.

Die Stelle, an der der Formschluss zwischen den beiden Einsätzen 18, 20 gebildet ist, liegt in etwa mittig zwischen den beiden Ringscheiben 24 der beiden Einsätze 18, 20 in der axialen Mitte M der beiden Einsätze 18, 20.

In ihrem Inneren schließen die beiden Einsätze 18, 20 einen ringförmigen, hier luftgefüllten Hohlraum 36 ein. Durch die Anlage der freien Enden 30a, 32a der Schenkel 30, 32 an den Anlageabschnitten 26a, 28a ist der Hohlraum 36 dicht nach außen abgeschlossen.

Auf der radialen Außenseite sowie der radialen Innenseite der beiden Einsätze 18, 20 treffen die Schenkel 26, 30 sowie die Schenkel 28, 32 bündig aufeinander, sodass keine Kante in Axialrichtung A gebildet ist.

Jeder der Einsätze 18, 20 hat in diesem Beispiel einen umlaufenden, radial nach außen gerichteten Vorsprung 38, an dem die Ringscheibe 24 radial über die Schenkel 26, 28 bzw. 30, 32 hervorsteht und an den jeweils der Abschnitt 16 aus faserverstärktem Kunststoff bündig anschließt. Im Bereich über dem Formschluss der beiden Einsätze 18, 20 ist jedoch ein Hohlraum 40 gebildet, in dem der faserverstärkte Kunststoff von den Einsätzen 18, 20 leicht beabstandet ist.

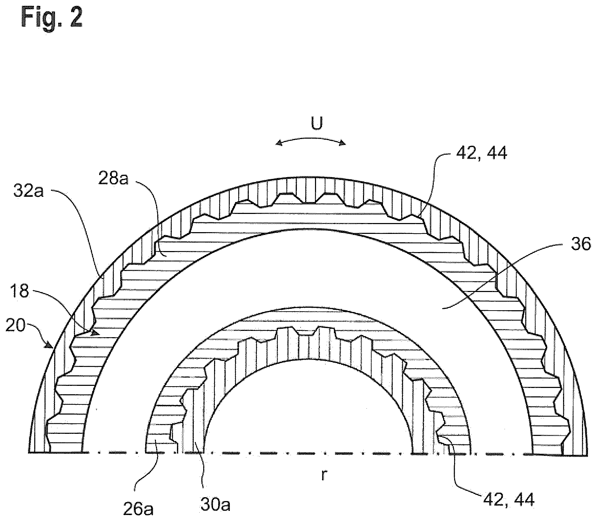

In Umfangsrichtung U ist zwischen den beiden Einsätzen 18, 20 sowohl ein Formschluss als auch ein Kraftschluss ausgebildet (siehe Figur 2).

Hierzu ist radial an den axial verlaufenden Bereichen 34b der Anlageabschnitte 26a, 28a sowie an den an diesen anliegenden Abschnitten der freien Enden 30a, 32a der Schenkel 30, 32 jeweils eine Verzahnung 42, 44 ausgebildet, wobei die Verzahnungen 42, 44 an den beiden Einsätzen 18, 20 komplementär spielfrei ineinandergreifen. Es wäre auch möglich, Verzahnungen nur an einem Paar von Schenkeln vorzusehen.

Auf diese Weise wird eine in Umfangsrichtung U wirkende Kraft auf einen der Einsätze 18, 20 direkt und unmittelbar auch auf den anderen Einsatz 20, 18 übertragen, und Kräfte beim Beschleunigen und Bremsen werden gleichmäßig im Nabenbereich verteilt.

Bei der Fertigung des Rads 10 werden vor dem Verbinden mit den faserverstärkten Kunststoffabschnitten 16 die beiden Einsätze 18, 20 in Axialrichtung A ineinander geschoben, sodass sowohl der axiale und radiale als auch der Formschluss in Umfangsrichtung durch den Eingriff der freien Enden 30a, 32a der Schenkel 30, 32 mit den Anlageabschnitten 26a, 28a an den Schenkeln 26, 28 und den gleichzeitigen Eingriff der Verzahnungen 42, 44 hergestellt wird.

Beim Ineinanderstecken der beiden Einsätze 18, 20 dienen die axial verlaufenden Bereiche 34b der Anlageabschnitte 26, 28a des ersten Einsatzes 18 als Führung für die freien Enden 30a, 32a der Schenkel 30, 32 des zweiten Einsatzes 20.

Die Einsätze 18, 20 werden dann mit den Abschnitten 16 des Nabenbereichs aus dem faserverstärkten Kunststoff jeweils in einem Bereich nahe der Außenseiten der Einsätze 18, 20 fest verbunden. Diese Verbindung kann beispielsweise durch Einlaminieren, Verkleben oder Einpressen erfolgen.

Durch den Formschluss der beiden Einsätze 18, 20 ist eine gute Wärmeübertragung von einem Einsatz zum anderen gegeben, insbesondere von demjenigen Einsatz, an dem die Bremsscheibe befestigt ist. Durch die Verteilung der Wärmeenergie auf den gesamten Nabenbereich wird ein Wärmestau verhindert und die Maximaltemperatur reduziert. Außerdem erfolgt aufgrund des Formschlusses in Umfangsrichtung stets eine Kraftübertragung zwischen den Einsätzen 18, 20, sowohl bei einer Krafteinleitung durch das Antriebsritzel als auch bei einer Krafteinleitung durch die Bremsscheibe, sodass das Rad 10 immer gleichmäßig belastet wird.

## Patentansprüche

1. Rad für ein Motorrad oder einen Motorroller, bei dem ein Nabenbereich des Rads (10) zwei starre, selbsttragende, metallische Einsätze (18, 20) aufweist, die an axial gegenüberliegenden Seiten des Nabenbereichs angeordnet und die in Axial- und Radialrichtung (A, r) formschlüssig miteinander verbunden sind, wobei das Rad (10) abschnittsweise aus einem faserverstärkten Kunststoff besteht und die beiden Einsätze (18, 20) mit dem umgebenden Faserverbund faserverstärkter Kunststoffabschnitte (16) des Rades (10) verbunden sind, wobei zwischen den beiden Einsätzen (18, 20) ein Form- und Kraftschluss in Umfangsrichtung (U) gebildet ist und an zumindest einer radialen Außenseite eines der Einsätze (18, 20) sowie an zumindest einer radialen Innenseite des anderen Einsatzes (18, 20) komplementäre, ineinandergreifende Verzahnungen (42, 44) ausgebildet sind.

2. Rad nach Anspruch 1, **dadurch gekennzeichnet, dass** zumindest einer der Einsätze (18, 20) zur Verbindung mit einem Antriebsritzel und der andere Einsatz (20, 18) zur Verbindung mit einer Bremsscheibe ausgelegt ist.

3. Rad nach einem der vorhergehenden Ansprüche, **dadurch gekennzeichnet, dass** der faserverstärkte Kunststoff ein kohlefaserverstärkter Kunststoff (CFK) ist.

4. Rad nach einem der vorhergehenden Ansprüche, **dadurch gekennzeichnet, dass** der Bereich der beiden Einsätze (18, 20), der den axialen Formschluss bildet, im Wesentlichen in der axialen Mitte (M) der beiden Einsätze (18, 20) liegt.

5. Rad nach einem der vorhergehenden Ansprüche, **dadurch gekennzeichnet, dass** zumindest einer der Einsätze (20) wenigstens einen umlaufenden, sich axial erstreckenden Schenkel (30, 32) hat, der an seinem freien Ende (30a, 32a) an einem Anlageabschnitt (26a, 28a) des anderen Einsatzes (18) anliegt.

6. Rad nach Anspruch 5, **dadurch gekennzeichnet, dass** am freien Ende des Schenkels oder am Anlageabschnitt (26a, 28a) eine Schulter ausgebildet ist, die einen axialen und radialen Anschlag darstellt.

7. Rad nach einem der Ansprüche 5 und 6, **dadurch gekennzeichnet, dass** jeder Einsatz (18, 20) zwei umlaufende, koaxiale, sich axial erstreckende Schenkel (26, 28, 30, 32) aufweist, wobei an jedem der Paare gegenüberliegender Schenkel (26, 30, 28, 32) jeweils an einem Schenkel (26, 28) ein Anlageabschnitt (26a, 28a) ausgebildet ist.

8. Rad nach einem der vorhergehenden Ansprüche, **dadurch gekennzeichnet, dass** beide Einsätze (18, 20) zusammen einen torusförmigen Hohlraum (36) umschließen.

## Claims

1. Wheel for a motorcycle or a motor scooter, in the case of which a hub region of the wheel (10) comprises two rigid, self-supporting, metal inserts (18, 20) which are arranged on axially opposite sides of the hub region and are connected to one another in form-fitting fashion in the axial and radial directions (A, r), wherein the wheel (10) at least partially consists of a fibre-reinforced plastic and the two inserts (18, 20) are connected to the surrounding fibre composite of fibre-reinforced plastics portions (16) of the wheel (10), wherein a form and force fit in the circumferential direction (U) is formed between the two inserts (18, 20) and complementary, intermeshing toothings (42, 44) are formed on at least one radial outer side of one of the inserts (18, 20) and on at least one radial inner side of the other insert (18, 20).

2. Wheel according to Claim 1, **characterized in that** at least one of the inserts (18, 20) is designed for connection to a drive pinion and the other insert (20, 18) is designed for connection to a brake disc.

3. Wheel according to either of the preceding claims, **characterized in that** the fibre-reinforced plastic is a carbon-fibre-reinforced plastic (CFRP).

4. Wheel according to one of the preceding claims, **characterized in that** the region of the two inserts (18, 20) that forms the axial form fit lies substantially in the axial middle (M) of the two inserts (18, 20).

5. Wheel according to one of the preceding claims, **characterized in that** at least one of the inserts (20) has at least one axially extending leg (30, 32) which runs around the circumference and at its free end (30a, 32a) bears against a bearing portion (26a, 28a) of the other insert (18).

6. Wheel according to Claim 5, **characterized in that** a shoulder constituting an axial and radial stop is formed at the free end of the leg or at the bearing portion (26a, 28a).

7. Wheel according to either of Claims 5 and 6, **characterized in that** each insert (18, 20) has two coaxial, axially extending legs (26, 28, 30, 32) running around the circumference, wherein a bearing portion (26a, 28a) is formed on a respective leg (26, 28) of each of the pairs of opposing legs (26, 30, 28, 32).

8. Wheel according to one of the preceding claims, **characterized in that** the two inserts (18, 20) together enclose a toroidal cavity (36).

## Revendications

1. Roue destinée à une motocyclette ou un scooter, une zone formant moyeu de la roue (10) comportant deux inserts métalliques rigides et autoportants (18, 20) qui sont disposés sur des côtés axialement opposés de la zone formant moyeu et qui sont reliés entre eux par complémentarité de formes dans les directions axiale et radiale (A, r), la roue (10) étant par portions en une matière synthétique renforcée par des fibres et les deux inserts (18, 20) étant reliés au composite de fibres environnant de portions (16) de matière synthétique renforcée par des fibres de la roue (10), une liaison en force ou par complémentarité de formes étant formée entre les deux inserts (18, 20) dans la direction circonférentielle (U), des dentures complémentaires (42, 44), qui s'engrènent, étant formées sur au moins un côté extérieur radial de l'un des inserts (18, 20) et sur au moins un côté intérieur radial de l'autre insert (18, 20).

2. Roue selon la revendication 1, **caractérisée en ce qu'**au moins un des inserts (18, 20) est conçu pour être relié à un pignon d'entraînement et l'autre insert (20, 18) est conçu pour être relié à un disque de frein.

3. Roue selon l'une des revendications précédentes, **caractérisée en ce que** la matière synthétique renforcée par des fibres est une matière synthétique renforcée par des fibres de carbone (CFK).

4. Roue selon l'une des revendications précédentes, **caractérisée en ce que** la zone des deux inserts (18, 20), qui forme la liaison axiale par complémentarité de formes, est située sensiblement au centre axial (M) des deux inserts (18, 20).

5. Roue selon l'une des revendications précédentes, **caractérisée en ce qu'**au moins un des inserts (20) comporte au moins une branche circonférentielle (30, 32) qui s'étend axialement et qui s'appuie à son extrémité libre (30a, 32a) sur une portion d'appui (26a, 28a) de l'autre insert (18).

6. Roue selon la revendication 5, **caractérisée en ce qu'**un épaulement, qui représente une butée axiale et radiale, est formé à l'extrémité libre de la branche ou sur la portion d'appui (26a, 28a).

7. Roue selon l'une des revendications 5 et 6, **caractérisée en ce que** chaque insert (18, 20) comporte deux branches circonférentielles coaxiales (26, 28, 30, 32) qui s'étendent axialement, une portion d'appui (26a, 28a) étant formée sur une branche (26, 28) sur chacune des paires de branches opposées (26, 30, 28, 32) .

8. Roue selon l'une des revendications précédentes, **caractérisée en ce que** les deux inserts (18, 20) enserrent conjointement une cavité toroïdale (36).
